# DEMANDE DE BREVET EUROPEEN

(11) **EP 1 154 168 A1**
(43) Date de publication de la demande: **14.11.2001**
(21) Numéro de dépôt: 01401136.5
(22) Date de dépôt: 03.05.2001
(51) Int. Cl.: F16B 21/02

(54) **Dispositif d'immobilisation d'une pièce sur un arbre**

(30) Priorité: 10.05.2000 FR 0005922
(71) Demandeur: Ecole Nationale Supérieure D'Arts et Métiers ENSAM, 75013 Paris (FR)
(72) Inventeur: Aoussat, Améziane, 92120 Montrouge (FR); Luong, Liên, 75013 Paris (FR); Le Coq, Marc, 93160 Noisy le Grand (FR); Planard, Philippe, 91140 Bures sur Ivette (FR)
(74) Mandataire: Robert, Jean-Pierre

(57) **Abrégé**

Dispositif de liaison par friction d'une pièce (P) à un arbre lisse (B), comportant un ensemble de deux éléments conjugués, le premier étant un noyau (N) formé d'un manchon cylindrique (2) s'enfilant sur l'arbre (B), et radialement déformable, le second étant une armature (A) formée d'une structure radialement rigide (8) entourant le noyau, les deux éléments présentant des surfaces cylindriques non circulaires conjuguées (5, 11) en regard l'une de l'autre, de façon que ces surfaces autorisent au moins une position angulaire relative des deux éléments dans laquelle le noyau est libre à l'intérieur de l'armature, et au moins une autre position angulaire relative des deux éléments dans laquelle le noyau est déformé radialement sur l'arbre par la coopération des surfaces en regard susdites, la pièce à immobiliser étant solidaire de l'un des deux éléments.

## Description

Un certain nombre de jouets éducatifs proposent aux enfants de mettre en oeuvre des transmissions de mouvement par l'intermédiaire de pignons ou d'engrenages. A cette fin, le fabricant du jouet met à la disposition de l'enfant un ensemble d'axes et de pignons à relier entre eux. L'art antérieur connaît plusieurs types de liaison entre ces pignons et ces axes. Il est par exemple connu le montage à force du pignon sur l'arbre. Un alésage est pratiqué dans le pignon, d'un diamètre légèrement inférieur au diamètre extérieur de l'arbre. Si le serrage ainsi installé est fort, la liaison est à même de transmettre des couples importants et d'assurer la stabilité du positionnement angulaire du piston sur l'axe. Mais la mise en place par l'enfant du pignon sur l'axe sera mal aisé. Si au contraire, le serrage installé est faible, le positionnement du pignon sur l'axe en sera facilitée, mais la liaison ne sera pas capable de transmettre des couples importants.

Une autre solution connue est l'utilisation d'une vis de pression qui vient s'engager dans un taraudage ménagé dans un moyeu cylindrique du pignon. Si la mise en oeuvre d'une telle liaison est simple, elle nécessite l'utilisation d'un tournevis que l'enfant ne sait pas forcément manipuler ; par ailleurs le calage angulaire du pignon peut faire que la vis ne soit par forcément facilement accessible pour sa manoeuvre. Enfin cette liaison souffre de ne pouvoir transmettre que des couples limités.

L'état de la technique comprend aussi des liaisons par cannelure. Des cannelures sont pratiquées sur l'arbre, coopérant avec des cannelures correspondantes ménagées sur le pignon. Cette liaison permet une transmission efficace du couple, mais le positionnement angulaire du pignon par rapport à l'arbre est limité au pas des cannelures. Il reste par ailleurs à immobiliser en translation le pignon par rapport à l'arbre.

Il s'agit alors de trouver un système de liaison pignon arbre réversible, facilement manoeuvrable, ne nécessitant pas d'outils, permettant un calage angulaire et axial du pignon par rapport à l'arbre aisé et la transmission d'un couple non négligeable.

Le problème est résolu conformément à l'invention par l'utilisation d'un ensemble de deux éléments conjugués. Le premier est un noyau formé d'un manchon cylindrique s'enfilant sur l'arbre, possédant la capacité de se déformer radialement vers l'arbre. Le second élément de l'ensemble est une armature formée d'une structure radialement rigide entourant le noyau.

Ces deux éléments présentent des surfaces cylindriques non circulaires conjuguées en regard l'une de l'autre, de façon que ces surfaces autorisent au moins une première position angulaire relative des deux éléments dans laquelle le noyau est libre dans l'armature, et au moins une seconde position angulaire relative des deux éléments dans laquelle le noyau est déformé radialement vers l'arbre par la coopération des surfaces susdites. La pièce à immobiliser est solidaire de l'un des deux éléments de l'ensemble.

Dans la première position angulaire remarquable, le noyau, enfilé sur l'arbre, est introduit à l'intérieur de l'armature. Par rotation relative du noyau dans l'armature, on fait coopérer les deux surfaces cylindriques non circulaires conjuguées en regard l'une de l'autre, de façon que le noyau soit déformé radialement, pour ainsi créer une liaison par friction entre le noyau et l'arbre d'une part et l'arbre et l'armature d'autre part. La pièce à immobiliser étant liée à l'un des deux éléments, elle se retrouve ainsi liée par friction à l'arbre.

Avantageusement, la capacité de déformation radiale du noyau est obtenue en pratiquant dans celui-ci au moins une fente selon un plan contenant l'axe de l'arbre.

Un noyau ainsi réalisé acquiert une capacité de pincement de l'arbre par sa déformation radiale.

De préférence, celui des deux éléments de l'ensemble qui n'est pas solidaire de la pièce à immobiliser, est équipé d'un organe de préhension permettant de manoeuvrer cet élément en rotation relativement à l'autre.

Cet organe de préhension permet une manoeuvre aisée de l'élément qui lui est solidaire, et peut être adapté à la morphologie de l'enfant.

Avantageusement, on aura prévu un organe d'arrêt en rotation d'un des éléments par rapport à l'autre, de façon que la rotation relative deux éléments puissent être stoppée dans la seconde position angulaire susdite

De préférence, ce moyen d'arrêt en rotation est constitué d'au moins un redan ménagé sur l'une des surface conjuguées, prenant appui sur la surface de l'autre élément.

Ainsi réalisé, ce dispositif de liaison ne requiert aucun outillage pour sa mise en oeuvre, et peut être adapté à la capacité de préhension des enfants.

L'intensité du serrage par friction ainsi réalisé peut être aisément modulée en jouant sur la conjugaison des deux surfaces coopérantes.

Par ailleurs, le dispositif de liaison décrit dans l'invention n'est pas limité aux applications d'engrenages, mais bien au contraire peut s'adapter à la liaison de toute pièce sur un arbre lisse.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue en perspective du noyau,
- la figure 2 est une vue de bout du noyau,
- la figure 3 est une vue en perspective de l'armature, solidaire en l'occurrence de la pièce immobilisée,
- la figure 4 est une vue latérale en coupe partielle de l'armature solidaire de la pièce,
- la figure 5 est une vue debout présentant le noyau engagé dans l'armature dans la position angulaire relative libre,
- la figure 6 est une vue debout présentant le noyau engagé dans l'armature, dans la position angulaire relative serrée.

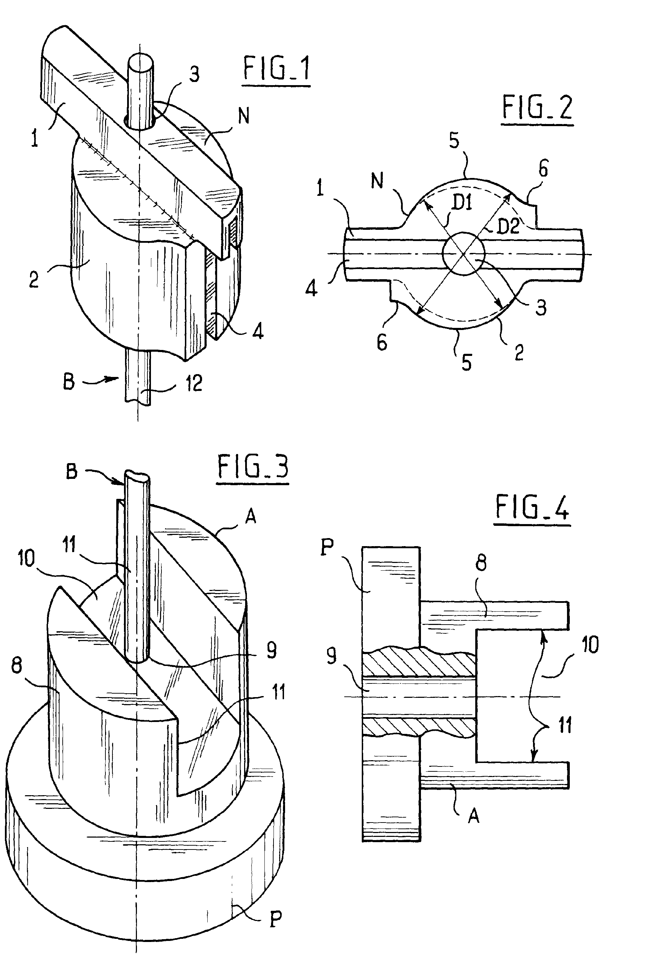

La figure 1 représente un noyau N monté sur l'arbre B, l'arbre B s'enfilant dans un alésage 3 pratiqué dans le noyau N. Ce noyau N est composé d'un manchon cylindrique 2 portant sur l'une de ses bases un élément 1 de préhension de forme générale parallélépipédique s'étendant radialement à l'axe 12 de l'arbre B au-delà de l'enveloppe externe du manchon cylindrique 2, de façon à faciliter la manoeuvre de rotation du noyau N sur l'arbre B.

Une fente 4 passant par l'axe du manchon cylindrique 2 est pratiquée dans le noyau de façon à lui conférer une capacité de déformation radiale. Cette fente sépare complètement le manchon cylindrique 2 en deux parties ; ces deux parties restent toutefois solidaire du fait que la fente ne coupe pas le noyau N en deux, mais s'arrête dans l'épaisseur de l'organe de préhension 1. On a ainsi réalisé une pince dont la déformation radiale est susceptible d'immobiliser le noyau N sur l'arbre B par friction.

La figure 2 est une vue en bout selon l'axe 12 de l'arbre B, du noyau N. On y distingue l'organe de préhension 1 s'étendant au-delà de la limite du manchon cylindrique 2, ainsi que la trace de la fente 4 dont on constate qu'elle coupe le manchon 2 en deux parties. La surface extérieure du manchon cylindrique 2 affecte la forme d'une surface de came 5 symétrique vis-à-vis de l'axe 12. Cette surface 5 présente un profil évolutif partant d'une région repérée par le diamètre D1, et s'éloignant progressivement de l'axe 12 jusqu'à une région repérée par le diamètre D2. Cette surface 5 de came est terminée en ses deux éléments symétriques par un redan 6.

La figure 3 est une vue en perspective d'une armature A montée sur l'axe B au moyen d'un alésage 9 pratiqué dans l'armature. Cette armature A est liée à la pièce P à immobiliser. L'armature est composée d'un manchon cylindrique 8 dans lequel a été pratiquée une large fente 10 dont la direction principale contient l'axe 12, de façon à ménager des flancs 11 parallèles qui constituent la surface de l'armature A conjuguée avec la surface 5 du noyau N.

Sur la figure 4, on constate que les flancs 11 sont disposés de manière symétrique par rapport à l'axe 12. On obtient de cette façon une surface conjuguée susceptible de coopérer avec la surface externe du manchon 2 du noyau N. Le manchon 8 de l'armature A est ici réalisé intégralement avec la pièce P. On peut bien sûr imaginer d'autres modes de solidarisation comme par exemple un vissage ou un collage.

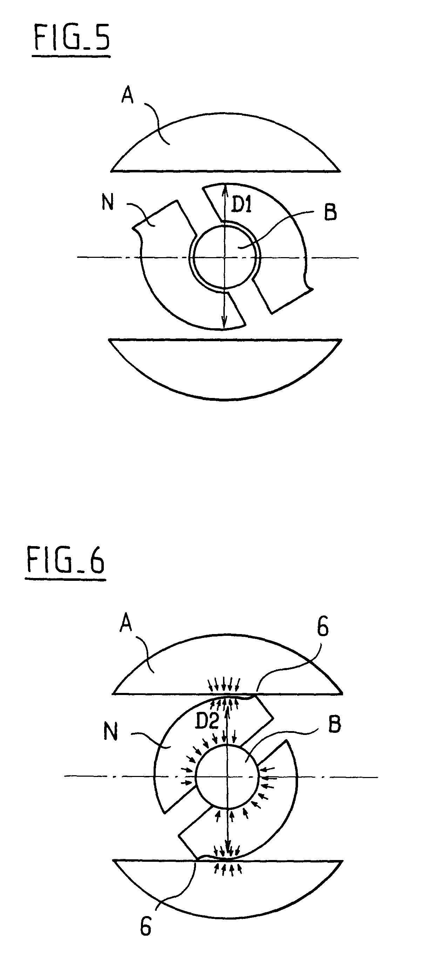

Les figures 5 et 6 montrent la façon dont l'armature et le noyau coopèrent. A la figure 5, on constate que l'écartement des flancs 11 est légèrement supérieur à la largeur de la surface 5 de came du manchon du noyau N repéré par le diamètre D1. Cette caractéristique permet l'engagement axial du noyau N dans l'armature A, en vue de faire coopérer la surface de came 5 avec les flancs 11.

On manoeuvre le noyau N en rotation grâce à l'organe de préhension 1, pour amener en contact la surface de came du noyau N et les flancs 11 de l'armature A. La zone repérée par le diamètre D2 de la surface de came 5 ayant un encombrement légèrement supérieur à l'écartement des flancs parallèles 11, il faut alors exercer un certain effort pour amener en contact la zone repérée par le diamètre D2 de la surface de came 5 et les flancs 11 parallèles de l'armature A. Dans cette position, le noyau N est serré radialement par la coopération des flancs parallèles 11 et de la surface de came 5. Le noyau N pince alors l'arbre B, et l'ensemble des trois pièces arbre, noyau et armature est immobilisé par friction.

Sur la figure 6 encore, on distingue l'appui du redan 6 ménagé en extrémité de la surface de came 5 du manchon cylindrique 2 du noyau N sur les flancs 11 parallèles de l'armature A. Cet appui permet l'arrêt en rotation du noyau par rapport à l'armature en position de serrage. Grâce à cet appui, l'enfant ne peut plus tourner le noyau N dans l'armature 1. On s'assure ainsi que le serrage réalisé est maximal puisqu'il correspond à la coopération des flancs 11 de l'armature A avec la partie la plus enflée de la surface de came 5 du noyau N.

On peut bien sûr solidariser la pièce P du noyau N, et prévoir sur l'armature A un organe de préhension destiné à en faciliter sa manoeuvre de rotation.

On pourra rendre le noyau radialement déformable par d'autres moyens comme par exemple l'usinage de plusieurs fentes 4 passant par l'axe 12 ou encore en réalisant ce noyau dans un matériau beaucoup plus déformable que celui de l'armature.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Dispositif de liaison par friction d'une pièce (P) à un arbre lisse (B), **caractérisé en ce qu'**il comporte un ensemble de deux éléments conjugués, le premier étant un noyau (N) formé d'un manchon cylindrique (2) s'enfilant sur l'arbre (B), et radialement déformable, le second étant une armature (A) formée d'une structure radialement rigide (8) entourant le noyau (N), les deux éléments présentant des surfaces cylindriques non circulaires conjuguées (5, 11) en regard l'une de l'autre, de façon que ces surfaces autorisent au moins une première position angulaire relative des deux éléments dans laquelle le noyau est libre à l'intérieur de l'armature, et au moins une seconde position angulaire relative des deux éléments dans laquelle le noyau est déformé radialement sur l'arbre par la coopération des surfaces en regard susdites, la pièce à immobiliser étant solidaire de l'un des deux éléments.

2. Dispositif de liaison selon la revendication 1, **caractérisé en ce que** le noyau est fendu selon au moins un plan contenant à l'axe de l'arbre (4).

3. Dispositif de liaison selon l'une des revendications précédentes, **caractérisé en ce que** celui des deux éléments qui n'est pas solidaire de la pièce à immobiliser est équipé d'un organe de préhension (1) permettant d'effectuer la rotation de cet élément relativement à l'autre.

4. Dispositif de liaison selon l'une des revendications précédentes, **caractérisé en ce que** l'un au moins des deux éléments est muni d'un organe d'arrêt prenant appui sur l'autre élément permettant d'arrêter la rotation relative des deux éléments lorsque ceux-ci sont en position de serrage.

5. Dispositif de liaison selon la revendication 4, **caractérisé en ce que** l'organe d'arrêt en rotation consiste en au moins un redan (6) ménagé sur l'une des surfaces conjuguées prenant appui sur l'autre surface conjuguée.

6. Dispositif de liaison selon l'une des revendications précédentes, **caractérisé en ce que** l'une au moins des surfaces conjuguées en regard présente au moins une portion de surface de came (5).

7. Dispositif de liaison selon l'une des revendications précédentes, **caractérisé en ce que** l'une au moins des surfaces conjuguées présente au moins une portion plane parallèle à l'axe de l'arbre (11).
